# EUROPEAN PATENT APPLICATION

(11) **EP 1 889 664 A1**
(43) Date of publication of application: **20.02.2008**
(21) Application number: 06017025.5
(22) Date of filing: 16.08.2006
(51) Int. Cl.: B02C 18/30

(54) **Mincing machine with sound detection means**

(71) Applicant: CFS Slagelse A/S, 4200 Slagelse (DK)
(72) Inventor: Kofoed, Niels Peter, 4340 Töllöse (DK)
(74) Representative: Wolff, Felix

(57) **Abstract**

Meat mincing machine for mincing foodstuff, comprising at least one cutting set (1), the cutting set comprising a perforated plate (2)and a rotatable knife (3) and method for controlling a relative position of a knife and a perforated plate (2)in a mincing machine.

## Description

The present invention relates to a meat mincing machine for mincing foodstuff, comprising at least one cutting set, the cutting set comprising a perforated plate and a rotatable knife; and further to a method for controlling a relative position of a knife and a perforated plate in a mincing machine.

Meat mincing machines of the above-noted general type, are known in the art. Known meat mincing machines are afflicted with the problem that the knife operates with the perforated plate and, in some cases, with abrasive products, and is therefor subjected to a very fast wear, if the distance between the knife and the perforated plate is too small. Further, the food product may get spoiled by wear debris. On the other hand, if the knife is too far from the perforated plate, the food product will be minced insufficiently. The cutting set is arranged inside a housing, which has to be opened to determine whether the relative position of the knife and the perforated plate has to be adjusted or not.

Accordingly, it is an object of the present invention to provide a meat mincing machine which avoids the disadvantages of the prior art.

The above objective is accomplished by a mincing machine for mincing foodstuff, comprising at least one cutting set, the cutting set comprising a perforated plate and a rotatable knife, wherein a sound development of the cutting set is detectable by a detection means.

An advantage of the mincing machine according to the present invention is, that an undesirable position of the rotatable knife relative to the perforated plate can be determined, in particular during operation of the mincing machine, by the sound development of the cutting set. Preferably, a wear-development of the cutting set is detectable upon the sound development of the cutting set. The sound development of the cutting set depends, for example, upon the consistence and the mass flow of the food product which is minced. Further, the sound development changes with the distance between the rotating knife and the perforated plate. Furthermore, with increasing wear of the cutting set, the sound development of the cutting set changes, i.e. the sound development depends upon the wear-development of the cutting set. It was surprising to the person skilled in the art that the characteristic sound development of the cutting set with too small a distance between the knife and the perforated plate, as well as the sound development of the cutting set with too wide a gap are detectable during operation of the mincing machine.

The inventive mincing machine is used for mincing foodstuff, in particular for mincing meat. Mincing in the sense of this application comprises any method of breaking up foodstuff, such grinding, milling and comminuting. The mincing machine according to the present invention can comprise one, two or more cutting sets, one or more of which are provided with detection means for detecting the sound development of the cutting sets.

The person skilled in the art understands that upon detection of a false or undesirable relative position, i.e. too small or too wide a distance between the knife and the perforated plate, the relative position can be adjusted in order to avoid excessive wear of the knife and/or poor mincing quality. Preferably, the relative position of the rotatable knife and the perforated plate is adjustable, depending upon the sound development of the cutting set. Advantageously, the adjustment of the cutting set can be automated, so that the cutting set is permanently adjusted. Furthermore preferable, the mincing machine is adapted to issue an information or warning if the wear-development of the cutting set reaches a predefined threshold, in particular, if the wear-development reaches an unacceptable value. More preferable, an operator of the mincing machine is currently informed on the wear-development of the cutting set.

The detection means is preferably arranged in or at a housing of the cutting set, more preferable in an axial position of a plane between the perforated plate and the rotatable knife. The person skilled in the art understands that the distance between the knife and the perforated plate is infinitesimal and it is referred to in here as a plane rather than a gap. The axial position in the sense of the invention is the position in the direction perpendicular to the knife and/or the perforated plate.

The detection means, according to the invention, is any device capable of detecting sound, preferably it comprises a receiver for sound waves, such as, for example, a microphone or an accelerometer. The microphone is an acoustic to electric transducer that converts sound into an electrical signal. Microphones capture the sound waves, for example, with a thin, flexible diaphragm or ribbon. The vibrations of this element are then converted by various methods into an electrical signal that is an analog of the original sound. Most microphones use electromagnetic generation (dynamic microphones), capacitance change (condenser microphones) or piezoelectric generation to produce the signal from mechanical vibration. The microphone for the detection means according to the present invention may be chosen out of electret capacitor microphones, dynamic microphones, ribbon microphones, carbon microphones, piezo microphones, laser microphones or contact microphones. Contact microphones are designed to pick up vibrations directly from a solid surface or object, as opposed to sound vibrations carried through air. One use for this is to detect sounds of a very low level. The microphone commonly consists of a magnetic (moving coil) transducer, contact plate and contact pin. The contact plate is placed against the object from which vibrations are to be picked up, such as, for example, the housing of the inventive mincing machine, and the contact pin transfers these vibrations to the coil of the transducer.

Preferably, the detection means further comprises a sound wave analyzing means. Advantageously, from the sound or noise development of the cutting set, those sound waves can be filtered or otherwise extracted or differentiated, which characteristically provide information on the relative position of the knife to the perforated plate and or information on the the wear-development of the cutting set. For example, the relative position is, as well as the wear-development, determined by comparison to stored sound wave patterns. The sound wave analyzing means therefor preferably comprises a processor unit and a data storage.

The relative position of the knife is adjustable by axial displacement of the knife, the perforated plate or both. Preferably, the rotatable knife is mounted on a drive shaft, the drive shaft being axially displaceable. More preferable, the axial displacement is controllable by the processor unit.

Another aspect of the present invention is a method for monitoring a cutting set of a mincing machine, comprising the steps of
- detecting a sound development of the cutting set and
- analyzing the sound development,
- determining a relative position of a rotatable knife to a perforated plate of the cutting set on the basis of the sound development and/or
- determining a wear-development of the cutting set on the basis of the sound development.

An advantage of the inventive method is, that an unfavourable relative position of the knife and the perforated place and/or an unacceptable wear-development of the cutting set can be determined without visually inspecting the cutting set, in particular, without stopping the operation of the mincing machine and without opening a housing of the cutting set. Preferably, the wear-development is currently displayed, so that it can be followed, for example, by an operator.

The method preferably comprises the step of adjusting an axial position of the knife and/or the perforated plate, depending upon the sound development of the cutting set. The relative position can thus advantageously be adjusted continuously.

These and other characteristics, features and advantages of the mincing machine and method according to the present invention will become apparent from the following detailed description, taken in conjunction with the accompanying drawing, which illustrates, by way of example, the principles of the invention. The description is given for the sake of example only, without limiting the scope of the invention.

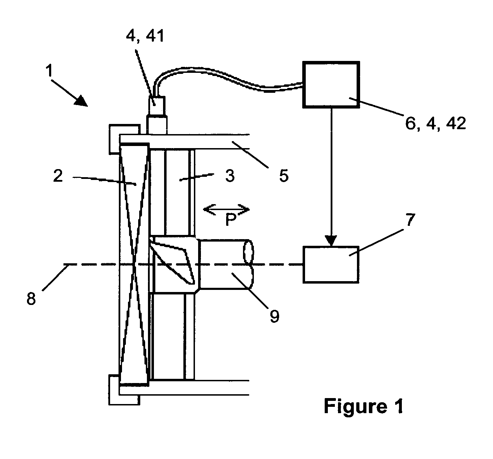

- **Figure 1**: shows a cutout of the mincing machine according to the invention, showing one cutter set.

**Figure 1** depicts a mincing machine according to the present invention, partly cut out and partly schematically. One cutting set 1 comprises a perforated plate 2 and a rotatable knife 3, the rotatable knife 3 being mounted on a drive shaft 9. Dashed line 8 depicts the axis of rotation of the knife 3 and the drive shaft 9. The cutting set 1 is encased in a housing 5. At the housing 5 a sound wave receiver 41 or microphone 41 is attached, which is part of the detection means 4. The microphone 41 is preferably located in a plane between the knife 3 and the perforated plate, so that the distance of the microphone 41 to the knife 3 and the perforated plate 2 is as short as possible. There could as well be a multitude of microphones 41 arranged on the circumference of the housing 5. Further, the microphone 41 could be arranged in a recess of the housing 5, or inside the housing 5, for example, in a recess of the knife 3 or the perforated plate 2.

The microphone 41 is connected to a sound wave analysing means 42 of the detection means 4. In the depicted embodiment, the wave analyser 42 is part of a computer 6 which comprises a processor unit and a data storage. The computer 6 is further adapted to control a motor means 7. Motor means 7 is adapted to axially displace the drive shaft 9 and the knife 3 respectively, the direction of the axial displacement being depicted by arrows P. The person skilled in the art understands that the wave analysis 42 and the control for the motor means 7 need not necessarily be executed by the same computer 6.

By use of the microphone 41, the sound development of the cutter set 1 is received and preferably converted to an electrical signal which is fed into the wave analysing means 42. A relative position and/or a wear-development of the rotating knife 3 and the perforated plate 2 is determined by the sound development of the cutter set 1. This is achieved, for example, by comparing the actual sound development to stored sound wave patterns which are characteristic for undesirable relative positions of the knife 3 and the perforated plate 2. Other influences on the sound development of the cutting set 1, such as the kind of food to be minced, or the actual mass flow of food, are preferably suppressed, so that they do not affect the determination of the relative position or wear-development of the knife 3 and the perforated plate 2. Further, short changes in sound pattern of the detected sound development, due to product inhomogeneities, for example, are preferably suppressed. If the distance between the knife 3 and the perforated plate 2 is too small or too wide, the motor means 7 is automatically controlled by the computer 6 to adjust the axial position of the knife 3 to its desired or optimal distance to the perforated plate 2.

## Claims

1. Mincing machine for mincing foodstuff, comprising at least one cutting set (1), the cutting set comprising a perforated plate (2) and a rotatable knife (3), **characterised in that** a sound development of the cutting set (1) is detectable by a detection means (4).

2. Mincing machine according to claim 1, **characterised in that** a relative position of the rotatable knife (3) and the perforated plate (2) is adjustable depending upon the sound development of the cutting set (1).

3. Mincing machine according to one of the preceding claims, **characterised in that** a wear-development is detectable upon the sound development of the cutting set (1).

4. Mincing machine according to one of the preceding claims, **characterised in that** the detection means (4) is arranged in or at a housing of the cutting set (1), preferably in an axial position of a plane between the perforated plate (2) and the rotatable knife (3).

5. Mincing machine according to one of the preceding claims, **characterised in that** the detection means (4) comprises a receiver (41) for sound waves.

6. Mincing machine according to one of the preceding claims, **characterised in that** the detection means (4) comprises a sound wave analyzing means (42).

7. Mincing machine according to one of the preceding claims, **characterised in that** the knife is mounted on a drive shaft (9), the drive shaft being axially displaceable.

8. Mincing machine according to one of the preceding claims, **characterised in that** the perforated plate (2) is axially displaceable.

9. Method for monitoring a cutting set (1) of a mincing machine, comprising the steps of
- detecting a sound development of the cutting set (1) and
- analyzing the sound development,
- determining a relative position of a rotatable knife (3) to a perforated plate (2) of the cutting set on the basis of the sound development and/or
- determining a wear-development of the cutting set on the basis of the sound development.

10. Method according to claim 9, further comprising the step of adjusting an axial position of the knife (3) and/or the perforated plate (2), depending upon the sound development of the cutting set (1).
